# EUROPEAN PATENT APPLICATION

(11) **EP 4 369 172 A1**
(43) Date of publication of application: **15.05.2024**
(21) Application number: 22851574.8
(22) Date of filing: 10.03.2022
(51) Int. Cl.: G06F 3/06

(54) **LUN MANAGEMENT METHOD AND DEVICE**

(30) Priority: 02.08.2021 CN 202110881520
(71) Applicant: Huawei Technologies Co., Ltd., Longgang Shenzhen, Guangdong 518129 (CN)
(72) Inventor: HUANG, Ke, Shenzhen, Guangdong 518129 (CN); ZHANG, Yong, Shenzhen, Guangdong 518129 (CN)
(74) Representative: Pfenning, Meinig & Partner mbB
(86) International application number: PCT/CN2022/080151
(87) International publication number: WO 2023/010849

(57) **Abstract**

This application discloses a LUN management method and apparatus, and relates to the field of computers. This application is used for reducing operation complexity in a service maintenance process. The method can be applied to a storage system. The method specifically includes: receiving a management request, where the management request carries an identifier of a first service; determining, from a plurality of LUNs in the storage system based on the identifier of the first service, n LUNs corresponding to the first service; and generating a first interface, where the n LUNs corresponding to the first service are displayed on the first interface, and the n LUNs are configured to store data of the first service.

## Description

This application claims priority to Chinese Patent Application No. 202110881520.8, filed with the China National Intellectual Property Administration on August 2, 2021 and entitled "LUN MANAGEMENT METHOD AND APPARATUS", which is incorporated herein by reference in its entirety.

### TECHNICAL FIELD

This application relates to the field of computer technologies, and in particular, to a LUN management method and apparatus.

### BACKGROUND

With the development of storage technologies and digitization in various industries, service migration requirements are generated due to upgrade of a storage system or adjustments of resource allocation.

During service migration, operation and maintenance personnel usually need to find a logical unit number (logical unit number, LUN) corresponding to a service in the storage system and then copy data from a source LUN in a source device to a target LUN in a target device, to complete service migration.

In the foregoing process, operation and maintenance personnel need to be proficient in services and be familiar with a LUN corresponding to each service. In addition, the foregoing process has a problem of complicated operations and is prone to an operation error.

### SUMMARY

This application provides a LUN management method and apparatus, to resolve a problem of complex operations in a service maintenance process. To achieve the foregoing objectives, the following technical solutions are used in this application.

According to a first aspect, this application provides a LUN management method. The method is applied to a storage system. The storage system may store, based on a write input/output interface IO sent by an application server, data of a plurality of services run on the application server into a plurality of logical units LUNs in the storage system. The method includes: receiving a management request, where the management request carries an identifier of a first service; determining, from the plurality of LUNs in the storage system based on the identifier of the first service, n LUNs corresponding to the first service; and generating a first interface, where the n LUNs corresponding to the first service are displayed on the first interface, the n LUNs are configured to store data of the first service, and n is a positive integer.

In the method provided in this application, after receiving the management request that carries the identifier of the first service, the storage system can determine, from the plurality of LUNs in the storage system based on the identifier of the first service, the n LUNs corresponding to the first service. In this way, the first interface including the n LUNs may be displayed, so that a user knows a LUN corresponding to the first service, to perform operations such as service migration, service change, service multiplication, or service monitoring on the first service. Compared with a method in a related technology in which a user needs to first find LUNs of services from a storage system one by one, and then performs processing based on the found LUNs, the method provided in this application can reduce operation complexity of the user and reduce a risk of an operation error.

In an implementation, the method may further include: receiving a confirmation operation of a user on the first interface; and migrating data in the n LUNs based on the confirmation operation, or displaying migrated evaluation information on the first interface. The evaluation information may specifically include information that reflects an impact caused by migrating the data in the n LUNs.

In the foregoing implementation, when the n LUNs need to be processed together, the user may perform a confirmation operation on the first interface, to trigger migration of the data in the n LUNs or display the migrated evaluation information on the first interface, without sequentially selecting LUNs that need to be processed in the interface, thereby simplifying user operations.

In an implementation, the method further includes: receiving a first selection operation and/or a second selection operation of a user on the first interface. At least one LUN is selected from the n LUNs through the first selection operation, and at least one LUN is selected from LUNs other than the n LUNs through the second selection operation.

In the foregoing implementation, it is considered that the displayed n LUNs may include LUNs that do not need to be processed. In addition, it is considered that LUNs that need to be processed but are not included in the n LUNs may exist. Therefore, in the foregoing implementation, the user may select a proper LUN from the n LUNs through the first selection operation for subsequent processing, and in addition, the user may also select a LUN other than the n LUNs through the second selection operation for subsequent processing.

In an implementation, the method further includes: migrating data in the LUN selected by the first selection operation and/or the second selection operation, or displaying migrated evaluation information on the first interface.

In the foregoing implementation, after the first selection operation and/or the second selection operation performed by the user on the first interface is received, the data in the selected LUN may be migrated based on the first selection operation and/or the second selection operation, or the migrated evaluation information is displayed on the first interface. Compared with the related technology, in the foregoing implementation, the user may complete an operation of selecting a LUN that needs to be processed on the first interface, thereby reducing operation difficulty of the user.

In an implementation, the method further includes: replicating, deleting, or monitoring the n LUNs; or replicating, deleting, or monitoring the LUN selected by the first selection operation and/or the second selection operation.

According to the foregoing implementations, the method provided in this application may be applied to various scenarios in which a LUN corresponding to a service needs to be replicated, deleted, or monitored, for example, may be applied to scenarios such as service multiplication, service change, and service monitoring, to reduce operation difficulty of the user and reduce a risk of an operation error.

In an implementation, the determining, from the plurality of LUNs based on the identifier of the first service, n LUNs corresponding to the first service includes: determining, based on characteristic parameters of the LUNs in the storage system, p LUNs corresponding to the first service, where the p LUNs are at least one of the n LUNs. The characteristic parameter includes a LUN configuration parameter and/or a LUN performance parameter.

In the foregoing implementation, it is considered that storage units (for example, LUNs) corresponding to different types of services are different in characteristic parameters. Therefore, a service corresponding to a LUN may be determined based on a characteristic parameter of the LUN, to determine a LUN corresponding to each service (including the first service).

In an implementation, the determining, based on characteristic parameters of the LUNs in the storage system, p LUNs corresponding to the first service specifically includes: inputting the characteristic parameters of the LUNs into an algorithm model to obtain the p LUNs.

In the foregoing implementation, it is considered that, when the LUN corresponding to the first service is determined based on the characteristic parameter of the LUN, the service corresponding to the LUN may be determined for each LUN in the storage system based on the characteristic parameter of the LUN, and then a LUN corresponding to the first service is selected from the LUNs in the storage system based on a determining result. Further, when the service corresponding to the LUN is determined based on the characteristic parameter of the LUN, the characteristic parameter of the LUN may be input into a trained algorithm model and the service of the LUN is determined by the algorithm model. Therefore, in the foregoing implementation, in a manner in which the characteristic parameters of the LUNs are input into the algorithm model to obtain the p LUNs, operation and maintenance personnel do not need to manually search for the LUN corresponding to the first service based on the characteristic parameters of the LUNs, thereby quickly and efficiently finding the LUN corresponding to the first service.

In an implementation, the LUN configuration parameter includes at least one of the following: an input/output operations per second IOPS, a bandwidth, access latency, a size of the IO, or a read IO ratio that is configured by the user for the LUN. The LUN performance parameter includes at least one of the following: a historical average IOPS, historical average latency, or a current free space size during running of the LUN.

In the foregoing implementation, it is considered that parameters such as the input/output operations per second IOPS, the bandwidth, access latency, the size of the IO, the read IO ratio that are configured by the user for the LUN, the historical average IOPS, the historical average latency, and the current free space size during running of the LUN vary with corresponding services, so that a service corresponding to the LUN may be determined based on the foregoing configuration parameter and performance parameter of the LUN.

In an implementation, the determining, from the plurality of LUNs based on the identifier of the first service, n LUNs corresponding to the first service includes: obtaining, based on information recorded in service configuration of the first service, q LUNs corresponding to the first service. The q LUNs are at least one of the n LUNs.

In the foregoing implementation, it is considered that in some application scenarios, for ease of subsequent maintenance, a skilled person records a LUN corresponding to a service in the information recorded in the service configuration in a process of creating or changing the service. Therefore, some or all of LUNs corresponding to the first service may be determined based on the information recorded in the service configuration of the first service.

According to a second aspect, a LUN management apparatus is provided. The LUN management apparatus is applied to a storage system. The storage system stores, based on a write input/output interface IO sent by an application server, data of a plurality of services run on the application server into a plurality of logical units LUNs in the storage system. The apparatus includes: a receiving unit, configured to receive a management request, where the management request carries an identifier of a first service; a processing unit, configured to determine, from the plurality of LUNs based on the identifier of the first service, n LUNs corresponding to the first service; and a processing unit, configured to generate a first interface, where the n LUNs corresponding to the first service are displayed on the first interface, the n LUNs are configured to store data of the first service, and n is a positive integer.

In an implementation, the receiving unit is further configured to receive a confirmation operation of a user on the first interface. The processing unit is further configured to migrate data in the n LUNs based on the confirmation operation, or display migrated evaluation information on the first interface.

In an implementation, the receiving unit is further configured to receive a first selection operation and/or a second selection operation of a user on the first interface. At least one LUN is selected from the n LUNs through the first selection operation, and at least one LUN is selected from LUNs other than the n LUNs through the second selection operation.

In an implementation, the processing unit is further configured to migrate data in the LUN selected by the first selection operation and/or the second selection operation, or display migrated evaluation information on the first interface.

In an implementation, the processing unit is further configured to replicate, delete, or monitor the n LUNs; or the processing unit is further configured to replicate, delete, or monitor the LUN selected by the first selection operation and/or the second selection operation.

In an implementation, the processing unit being configured to determine, from the plurality of LUNs based on the identifier of the first service, n LUNs corresponding to the first service includes: the processing unit being specifically configured to determine, based on characteristic parameters of the LUNs in the storage system, p LUNs corresponding to the first service. The p LUNs are at least one of the n LUNs. The characteristic parameter includes a LUN configuration parameter and/or a LUN performance parameter.

In an implementation, the processing unit is specifically configured to input the characteristic parameters of the LUNs into an algorithm model to obtain the p LUNs.

In an implementation, the LUN configuration parameter includes at least one of the following: an input/output operations per second IOPS, a bandwidth, access latency, a size of the IO, or a read IO ratio that is configured by a user for the LUN, and the LUN performance parameter includes at least one of the following: a historical average IOPS, historical average latency, or a current free space size during running of the LUN.

In an implementation, the processing unit being configured to determine, from the plurality of LUNs based on the identifier of the first service, n LUNs corresponding to the first service includes: the processing unit being specifically configured to obtain, based on information recorded in service configuration of the first service, q LUNs corresponding to the first service. The q LUNs are at least one of the n LUNs.

According to a third aspect, a LUN management apparatus is provided, including a processor and an interface. The processor receives or sends data through the interface. The processor is configured to implement the method according to any one of the first aspect or implementations of the first aspect.

According to a fourth aspect, a computer-readable storage medium is provided. The storage medium stores a computer program. When the computer program is executed by a processor, the method according to any one of the first aspect or the implementations of the first aspect is implemented.

According to a fifth aspect, a storage system is provided, including the LUN management apparatus according to any one of the second aspect or the implementations of the second aspect or the third aspect.

In addition, the storage system may further include one or more storage servers. In an implementation, the LUN management apparatus may include all or some hardware of one or more storage servers. In another implementation, the LUN management apparatus and the storage server may also be independent of each other.

According to a sixth aspect, a computer program product is provided. The computer program product includes instructions. When the instructions are run on a processor, the method according to any one of the first aspect or the implementations of the first aspect is implemented.

For beneficial effects that can be achieved in the second aspect to the sixth aspect and the implementations of the second aspect to the sixth aspect, refer to descriptions of the first aspect or the implementations of the first aspect. Details are not described herein again.

### BRIEF DESCRIPTION OF DRAWINGS

FIG. 1A is a first schematic diagram of a system architecture according to an embodiment of this application;
FIG. 1B is a second schematic diagram of a system architecture according to an embodiment of this application;
FIG. 2 is a first schematic diagram of a structure of an information processing apparatus according to an embodiment of this application;
FIG. 3A is a first schematic diagram of an operation interface according to an embodiment of this application;
FIG. 3B is a second schematic diagram of an operation interface according to an embodiment of this application;
FIG. 3C is a third schematic diagram of an operation interface according to an embodiment of this application;
FIG. 3D is a fourth schematic diagram of an operation interface according to an embodiment of this application;
FIG. 3E is a fifth schematic diagram of an operation interface according to an embodiment of this application;
FIG. 3F is a sixth schematic diagram of an operation interface according to an embodiment of this application;
FIG. 3G is a seventh schematic diagram of an operation interface according to an embodiment of this application;
FIG. 4A is a first schematic flowchart of an information processing method according to an embodiment of this application;
FIG. 4B is a second schematic flowchart of an information processing method according to an embodiment of this application; and
FIG. 5 is a second schematic diagram of a structure of an information processing apparatus according to an embodiment of this application.

### DESCRIPTION OF EMBODIMENTS

The following describes the technical solutions in embodiments of this application with reference to the accompanying drawings in embodiments of this application. To clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner for ease of understanding.

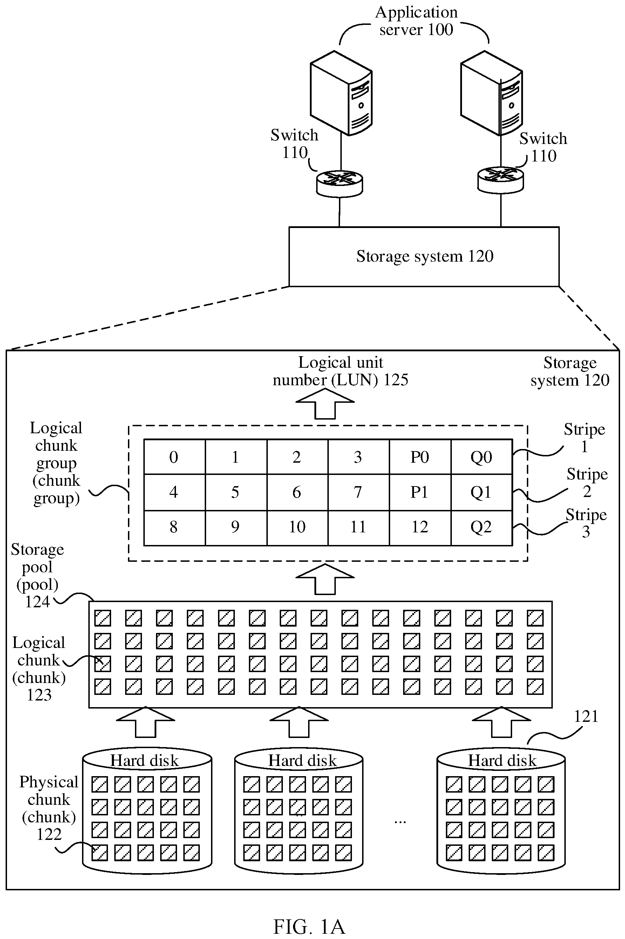

An application scenario of the technical solutions provided in embodiments of this application is first described. For example, FIG. 1A is a schematic diagram of a network architecture according to an embodiment of this application. In the application scenario shown in FIG. 1A, a function of a corresponding service may be implemented by running an application program. A computer that runs the application program may be referred to as an "application server". The application server 100 may be a physical machine or a virtual machine. The application server 100 includes but is not limited to a desktop computer, a server, a notebook computer, and a mobile device. The application server accesses a storage system 120 by using a switch 110 to access data. However, the switch 110 is only an optional device, and the application server 100 may also directly communicate with the storage system 120 by using a network. Alternatively, the switch 110 may be replaced with an Ethernet switch, an InfiniBand switch, a RoCE (RDMA over Converged Ethernet) switch, or the like.

The storage system 120 is configured to store data that needs to be read or stored in a service implementation process.

In an implementation, the storage system 120 may include a plurality of independent storage nodes. Each of the plurality of storage nodes may be an independent server, and each server may communicate with each other. Each server may separately include hardware members such as a processor, a memory, a network interface card, and a hard disk. The processor and the memory are configured to provide a computing resource. The processor is configured to process a data access request from outside the server. The memory is an internal memory that directly exchanges data with the processor. The memory can read and write data at any time with a high speed, and may be used as a temporary data memory for an operating system or another running program. The hard disk is configured to provide a storage resource, for example, store data. The hard disk may be a magnetic disk or another type of storage medium, such as a solid-state drive or a shingled magnetic recording hard disk. The network interface card is configured to communicate with the application server.

In another implementation process, the storage system 120 may be a central node including one or more master devices, data is centrally stored in the central node, and data processing services of the entire system are centrally deployed on the central node.

In addition, in some other application scenarios, the application server may also be integrated with the storage system. For example, functions of the application server 100 and the storage system 120 may be implemented by a device (for example, a server or a desktop computer) with both a data processing capability and a storage capability.

It is easy to understand that a framework structure of a storage system to which the technical solutions provided in this application are applied may not be limited in this embodiment of this application.

In addition, as shown in FIG. 1A, from a perspective of a logical layer structure inside the storage system, the storage system 120 may specifically include several hard disks. An actual address of storage space provided by a hard disk 121 may not be directly exposed to the application server 100 for use. The hard disk 121 may be any type of a storage device. This embodiment is described by using a solid-state drive, but a mechanical hard disk or another type of a hard disk is also used.

Further, each hard disk drive 121 may be divided into several physical chunks (chunks) 122, and these physical chunks 122 are mapped into logical chunks to form a storage pool (pool) 124. The storage pool 124 is configured to provide storage space upwards, and the storage space actually is from a hard disk 121 included in the storage system. Certainly, not all hard disks 121 provide space for the storage pool 124. In an actual application, the storage system may include one or more storage pools 124, and one storage pool 124 may include some or all hard disks 121. A plurality of logical chunks from different hard disks 121 or different storage nodes form a logical chunk group (chunk group), and the logical chunk group is a minimum allocation unit of the storage pool 124. From a perspective of ensuring data reliability, a corresponding mechanism may be used in a logical chunk group to ensure data reliability. For example, data may be stored through a multi-copy technology or an erasure coding (erasure coding, EC) check mechanism. The EC check mechanism is used as an example. One logical chunk group may include one or more stripes (stripe), for example, a stripe 1, a stripe 2, and a stripe 3 in FIG. 1A. Each stripe includes a data slice and a check slice. As shown in the figure, the stripe 1 includes a data slice 0 (for brevity of the accompanying drawing, only numbers of data slices are shown in the logical chunk group in the figure), a data slice 1, a data slice 2, a data slice 3, a data slice 4, and check slices P0 and Q0. When any two of the data slices or check slices are invalid, an invalid unit may be reconstructed based on the remaining data slices or check slices. This is the same for the stripe 2 and the stripe 3.

When a storage service layer applies for storage space from the storage pool 124, the storage pool 124 may provide one or more logical chunk groups for the storage service layer. The storage service layer further virtualizes the storage space provided by the logical chunk group into a logical unit (logical unit, LU) 125, and provides the logical unit 125 for the application server 100 for use. Each logical unit has a unique logical unit number (logical unit number, LUN). Since the application server 100 can directly sense a logical unit number, a person skilled in the art usually directly uses a LUN to refer to a logical unit. Each LUN has a LUN ID that is for identifying a corresponding LUN. A specific location of data in one LUN may be determined by a start address and a length (length) of the data. The start address is usually referred to as a logical block address (logical block address, LBA) by a person skilled in the art. It may be understood that three factors, that is, a LUN ID, an LBA, and a length, identify a determined address segment. A data access request generated by an application server usually carries a LUN ID, an LBA, and a length.

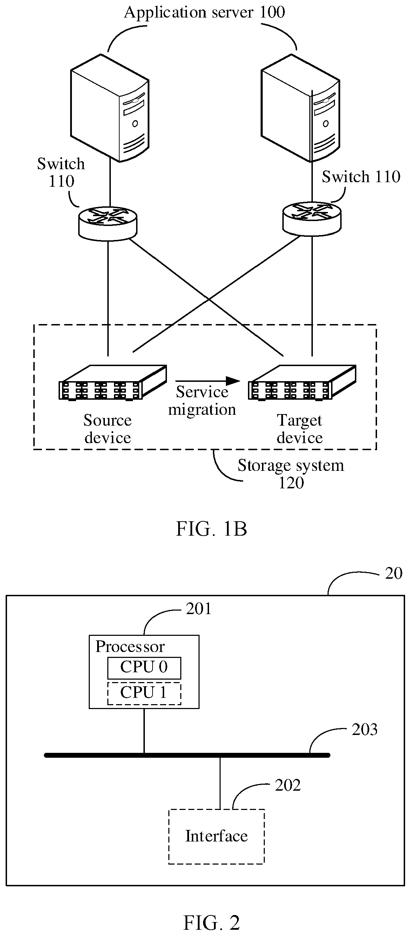

In a storage system, a service usually occupies a plurality of LUNs to store data. The storage system stores, based on a write input/output interface (input/output, IO) sent by the application server, data of a service run on the application server into a plurality of LUNs in the storage system. The write IO usually carries to-be-stored data content and a write address, but usually does not carry information about a service corresponding to the data. In other words, the storage system cannot directly know the service from which the data is written. In scenarios such as service migration, service change, service multiplication, and service monitoring, LUNs occupied by the service need to be found in the storage system, to perform corresponding processing. Service migration is used as an example. In a related technology, operation and maintenance personnel usually need to search a storage system for a LUN corresponding to the service (for ease of description, referred to as a "source LUN" below, and a storage device to which the source LUM belongs is referred to as a source device), and then copy data in the source LUN in the source device to a target LUN in a target device, to complete service migration, as shown in FIG. 1B. The target device and the source device may be storage devices in a same storage system (as shown in FIG. 1B), or may be devices in different storage systems.

In the foregoing process, operation and maintenance personnel need to be proficient in services and be familiar with a LUN corresponding to each service. In addition, the foregoing process has a problem of complicated operations and is prone to an operation error.

For the foregoing problem, in this embodiment of this application, in scenarios such as service migration, service change, service multiplication, and service monitoring in which a storage unit (for example, a LUN) corresponding to a service needs to be searched for in the storage system, n storage units corresponding to the service may be recommended to a user. For example, the n storage units that may be mounted to the service are displayed on an interface and recommended to the user, to prevent the user from searching the storage system for the storage units mounted to the service one by one.

The following describes the technical solutions provided in embodiments of this application with reference to the accompanying drawings.

Specifically, an embodiment of this application provides an information processing method. In specific implementation, the method may be implemented by an information processing apparatus 20 shown in FIG. 2.

The information processing apparatus 20 includes a processor 201 and an interface 202.

The processor 201 is configured to perform the information processing method provided in this application.

Specifically, the processor 201 may include a general-purpose central processing unit (central processing unit, CPU) and a memory, or the processor 201 may be a microprocessor, a field programmable gate array (Field Programmable Gate Array, FPGA), an application-specific integrated circuit (application-specific integrated circuit, ASIC), or the like. In a scenario in which the processor 201 includes a CPU and a memory, the CPU executes computer instructions stored in the memory, to perform the information processing method provided in this application. Specifically, the memory may be a read-only memory (read-only memory, ROM) or another type of static storage device that may store static information and instructions, a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store program code in a form of an instruction or a data structure and that can be accessed by a computer, but is not limited thereto.

In addition, in an actual application process, the interface 202 may be a communication interface, a transceiver, or the like, configured to connect the information processing apparatus to other hardware.

For example, the information processing apparatus 20 may be connected to a display screen by using the interface 202. The display screen is configured to display an image. For example, the display screen is configured to display n storage units corresponding to a service on the display screen in a scenario in which a storage unit (for example, a LUN) corresponding to the service needs to be searched for in the storage system. Specifically, the display screen may have a touch operation function for receiving a user operation, so that the information processing apparatus 20 performs, based on the user operation, the technical solutions provided in this embodiment of this application. For another example, the information processing apparatus 20 may be connected to an input device (for example, a mouse or a keyboard) by using the interface 202. The input device is configured to receive a user operation, so that the information processing apparatus 20 performs, based on the user operation, the technical solutions provided in this embodiment of this application.

In addition, the information processing apparatus 20 may further include a communication line 203. For example, the communication line 203 may be a data bus, to transmit information between the foregoing components.

For example, in an actual application process, the information processing apparatus 20 may be the application server 100 or some hardware in the application server 100 in FIG. 1A or FIG. 1B. For another example, the information processing apparatus 20 may be a hardware member with a management and control function in the storage system 120 in FIG. 1A or FIG. 1B. For example, the information processing apparatus 20 may be a storage server with a management and control function in a distributed storage system or some hardware inside the storage server, or a storage engine in a centralized storage system or some hardware inside the storage engine.

In addition, it should be noted that, in embodiments of this application, for ease of description, an apparatus for implementing the technical solutions provided in embodiments of this application is referred to as an "information processing apparatus". It may be understood that in an actual application process, an apparatus or a device for implementing the technical solutions provided in embodiments of this application may also be referred to as another name. For example, if a managed storage unit is in a unit of a LUN, the apparatus may be referred to as a "LUN management apparatus". In this embodiment of this application, names of the foregoing apparatuses may not be limited.

An example in which the technical solutions provided in this application are applied to an information processing apparatus is used, to describe an implementation process of applying the technical solutions provided in this application. A working process of the information processing apparatus may be as follows.

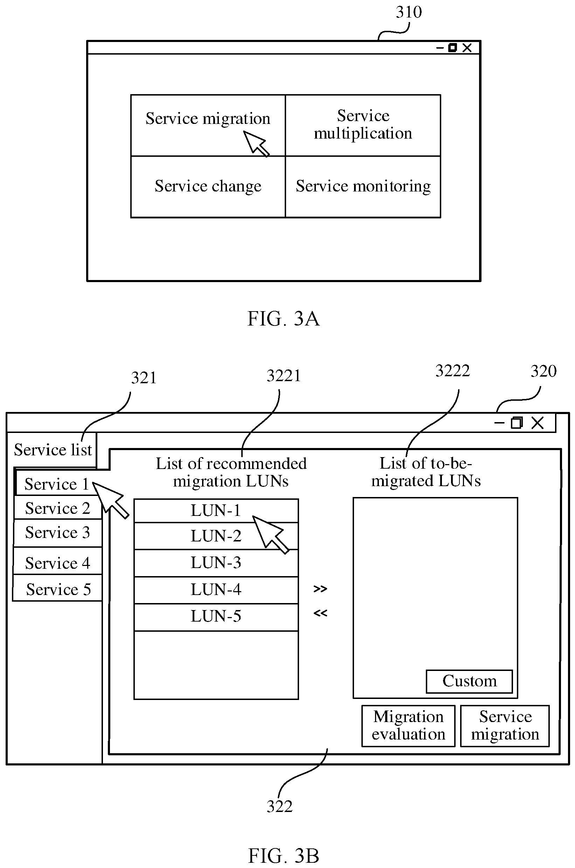

First, as shown in FIG. 3A, the information processing apparatus displays an operation interface 310 of the storage system by using a display screen.

Specifically, a user may perform a corresponding operation on an operation interface of the storage system, to implement corresponding processing on a service mounted in the storage system. For example, the operation interface 310 shown in FIG. 3A displays an example of four controls. Functions corresponding to the four controls are displayed on the four controls: "service migration", "service multiplication", "service change", and "service monitoring" respectively.

The service migration may be understood as migrating data in one or more LUNs (which may be referred to as a source LUN) mounted to a target service in the storage system to some other LUNs (which may be referred to as a target LUN), and replacing a function of the source LUN with the target LUN. The source LUN and the target LUN may be located on different storage servers of a same storage system, or may be located on storage servers of different storage systems. Distribution locations of the source LUN and the target LUN are not limited in this application.

The service multiplication may be understood as replicating data in one or more LUNs (which may be referred to as a source LUN) mounted to a target service in the storage system to some other LUNs (which may be referred to as a target LUN), so that the target LUN can also implement a function of the source LUN, thereby supporting an upper-layer service with a larger scale.

The service change may be understood as adding, deleting, or changing a LUN mounted to a target service.

The service monitoring may be understood as monitoring a running status of a target service, and may be specifically understood as monitoring a performance parameter (for example, a historical average input/output operations per second (input/output operations per second, IOPS), historical average latency, and a free space size of a LUN) of a LUN mounted to the target service.

Then, the information processing apparatus receives a first operation performed by the user on the operation interface 310.

The first operation indicates an operation of performing target processing on the service. For example, the first operation may be an operation of single-clicking, double-clicking, or touching and holding one control in the "service migration", the "service multiplication", the "service change", or the "service monitoring" in FIG. 3A. Specifically, the user may complete the first operation by using a mouse, a keyboard, a touchscreen, or the like. It should be noted that the following embodiments further include another user operation. For ease of description, a corresponding user operation is usually implemented by clicking in the following. However, it is easy to understand that, unless otherwise specified, a specific type (including single-clicking, double-clicking, touching and holding, or the like, and a manner of using a mouse, a keyboard, a touchscreen, or the like) of the another user operation is not limited in this embodiment of this application. Details are not described in the following.

Then, after receiving the first operation of the user, the information processing apparatus starts to execute a task corresponding to the target processing. For example, after the user clicks the "service migration" control, as shown in FIG. 3B, the information processing apparatus displays an operation interface 320.

The operation interface 320 includes a service list 321. The service list 321 includes a plurality of options. Each option corresponds to one service. As shown in FIG. 3B, the service list 321 includes five options: a service 1, a service 2, a service 3, a service 4, and a service 5.

After the information processing apparatus receives a click of the "service 1" option in the service list 321 by the user, as shown in FIG. 3B, the operation interface 320 displays a window 322 corresponding to the service 1.

The window 322 includes a "list of recommended migration LUNs" 3221 and a "list of to-be-migrated LUNs" 3222. The "list of recommended migration LUNs" 3221 is used to recommend a LUN mounted to the service 1 to the user. As shown in FIG. 3B, the "list of recommended migration LUNs" 3221 includes a plurality of LUN identifiers (that is, a LUN-1, a LUN-2, a LUN-3, a LUN-4, and a LUN-5), indicating that the LUN mounted to the service 1 may include the LUN-1, the LUN-2, the LUN-3, the LUN-4, and the LUN-5. It should be noted that, in this case, a LUN-n is merely used as an example to represent the LUN identifier. In an actual implementation process, another identification manner may also be used. For example, a LUN ID of each LUN is displayed in the "list of recommended migration LUNs" 3221 as the LUN identifier. This may not be limited in this application.

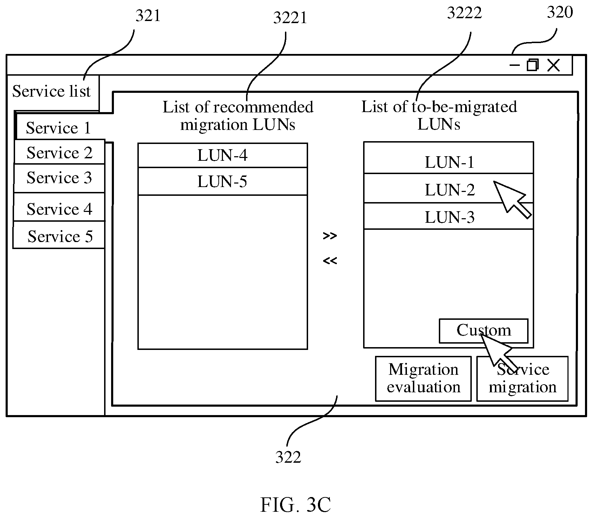

Then, the user may select LUN identifiers of LUNs that are actually mounted to the service 1 from the "list of recommended migration LUNs" 3221, and move these LUN identifiers to the "list of to-be-migrated LUNs" 3222. For example, after the user sequentially clicks the LUN-1, the LUN-2, and the LUN-3 in the "list of recommended migration LUNs" 3221, as shown in FIG. 3C, the LUN-1, the LUN-2, and the LUN-3 are moved to the "list of to-be-migrated LUNs" 3222. In addition, when the user selects a wrong LUN identifier, the user may further click a corresponding LUN identifier in the "list of to-be-migrated LUNs" 3222, to move the LUN identifier back to the "list of recommended migration LUNs" 3221.

In addition, it is considered that the LUNs displayed in the "list of recommended migration LUNs" 3221 may be incomplete, for example, a LUN-6 does not exist in the "list of recommended migration LUNs" 3221 in FIG. 3B, but actually the LUN-6 is also a LUN mounted to the service 1. Therefore, as shown in FIG. 3B and FIG. 3C, the window 322 may further include a "custom" control.

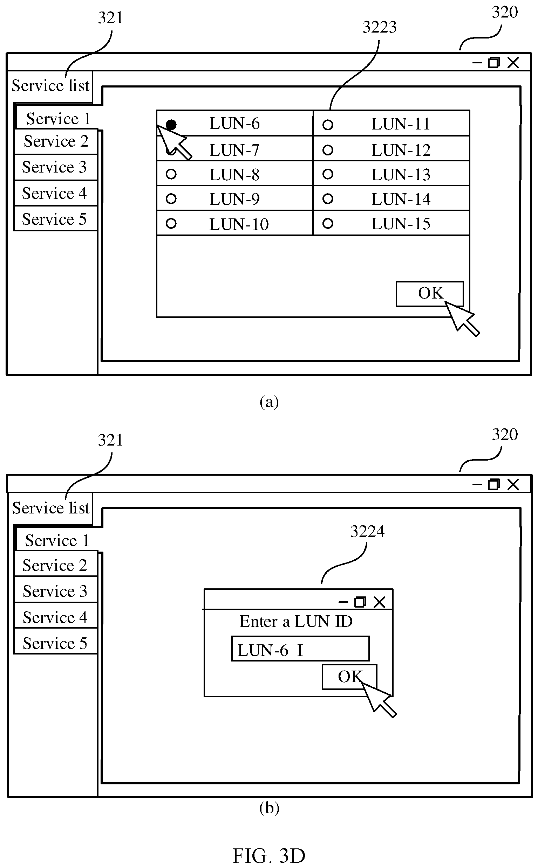

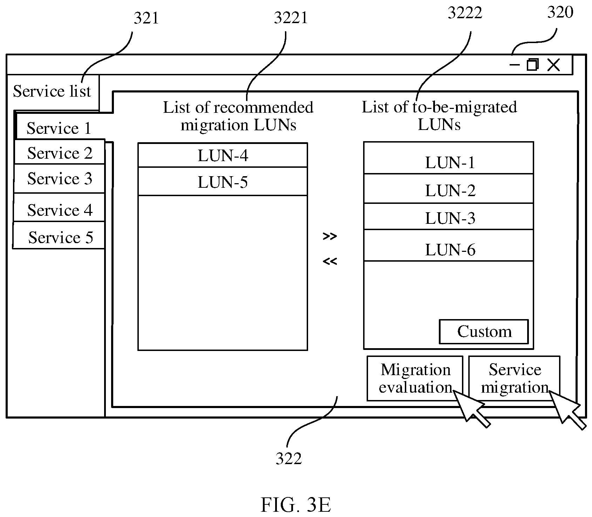

In an implementation, after the user clicks the "custom" control, as shown in section (a) in FIG. 3D, the information processing apparatus displays a window 3223. The window 3223 includes LUN IDs of some or all LUNs in the storage system. Then, the user selects a corresponding LUN ID (for example, selects the "LUN-6" in the figure) and clicks "OK", to add the LUN-6 to the "list of to-be-migrated LUNs" 3222, as shown in FIG. 3E. In another implementation, after the user clicks the "custom" control, as shown in section (b) in FIG. 3D, the information processing apparatus displays a window 3224. The user may enter a LUN ID (for example, enter the "LUN-6" in the figure) of the LUN to be added in the window 3224, and click "OK", to add the LUN-6 to the "list of to-be-migrated LUNs" 3222, as shown in FIG. 3E.

Then, after the user selects the LUN mounted to the service 1, as shown in FIG. 3E, the user may click the "service migration" control on the lower right of the window 322, so that the information processing apparatus migrates the service 1 based on the LUNs selected by the user (for example, the LUN-1, the LUN-2, the LUN-3, and the LUN-6 in the "list of to-be-migrated LUNs" 3222 in the figure). In other words, the information processing apparatus may migrate data in the LUN-1, LUN-2, LUN-3, and LUN-6 selected by the user to one or more target LUNs, and replace the function of the source LUN with the one or more target LUNs, to migrate the service 1.

In addition, after the user selects the LUN mounted to the service 1, the user may further click a "migration evaluation" control on the lower right of the window 322, so that the information processing apparatus evaluates, based on the LUN selected by the user, an impact generated by migrating the service 1. For example, the information processing apparatus evaluates, based on the LUN selected by the user, information such as load and capacity changes of the source device and the target device after the service 1 is migrated.

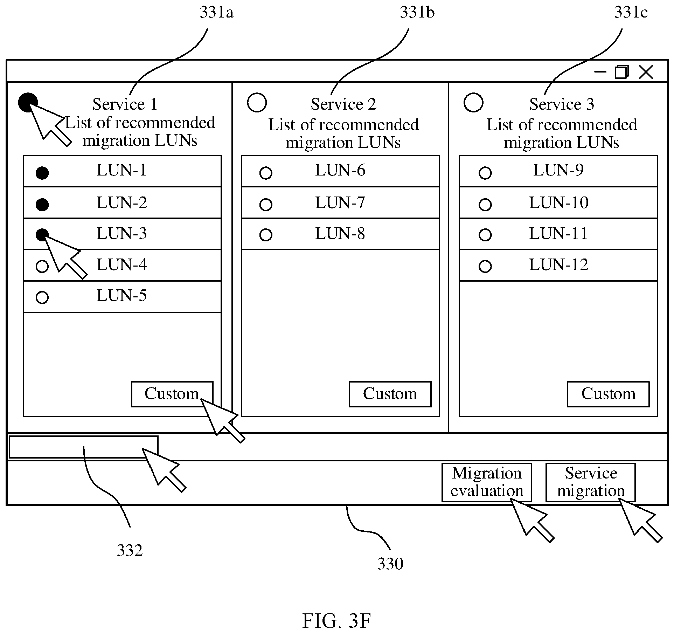

In another implementation, after the user clicks the "service migration" control in the operation interface 310 shown in FIG. 3A, the information processing apparatus may not display the operation interface 320, but display an operation interface 330 shown in FIG. 3F.

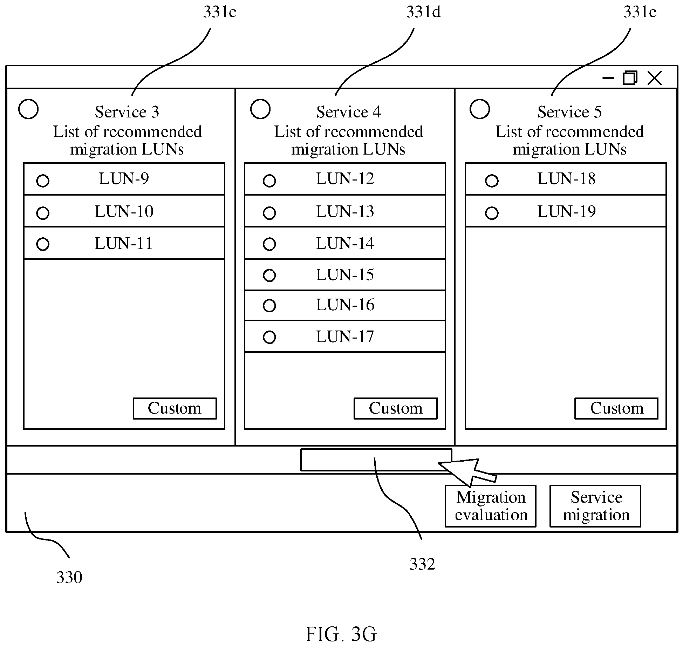

The operation interface 330 may include three windows: a window 331a, a window 331b, and a window 331c. Each window corresponds to one service. As shown in FIG. 3F, the window 331a corresponds to the service 1, the window 331b corresponds to the service 2, and the window 331c corresponds to the service 3. Each window includes a "list of recommended migration LUNs", to recommend a LUN mounted to the service to the user. In addition, the operation interface 330 may further include a slider 332. The user may enable, by sliding the slider 332, the information processing apparatus to switch a window displayed in the operation interface 330. As shown in FIG. 3G, after the slider 332 slides rightwards, a window 331c, a window 331d, and a window 331e are displayed in the operation interface 330, and corresponds to the service 3, the service 4, and the service 5 respectively.

Then, the user can select different windows to determine a service on which service migration needs to be performed. For example, in FIG. 3F, the user may determine, by selecting round buttons on the upper left of the window 331a, that service migration needs to be performed on the service 1.

Then, the user can select the LUN identifier of the LUN that is actually mounted to the service from the corresponding "list of recommended migration LUNs". For example, in FIG. 3F, the user selects round buttons on the left of LUN-1, LUN-2, and LUN-3.

In addition, the user may also click the "custom" control in the window 331a to add a LUN that is not included in the "list of recommended migration LUNs". After the user clicks the "custom" control in the window 331a, for display content of the information processing apparatus, refer to the foregoing FIG. 3D and the text description in FIG. 3D. Details are not described herein again.

In addition, the operation interface 330 may further include the "service migration" control and the "migration evaluation" control. For execution content of the information processing apparatus after the "service migration" control or the "migration evaluation" control is clicked, refer to the execution content of the information processing apparatus after the "service migration" control or the "migration evaluation" control is clicked in the window 322 by the user. Details are not described herein again.

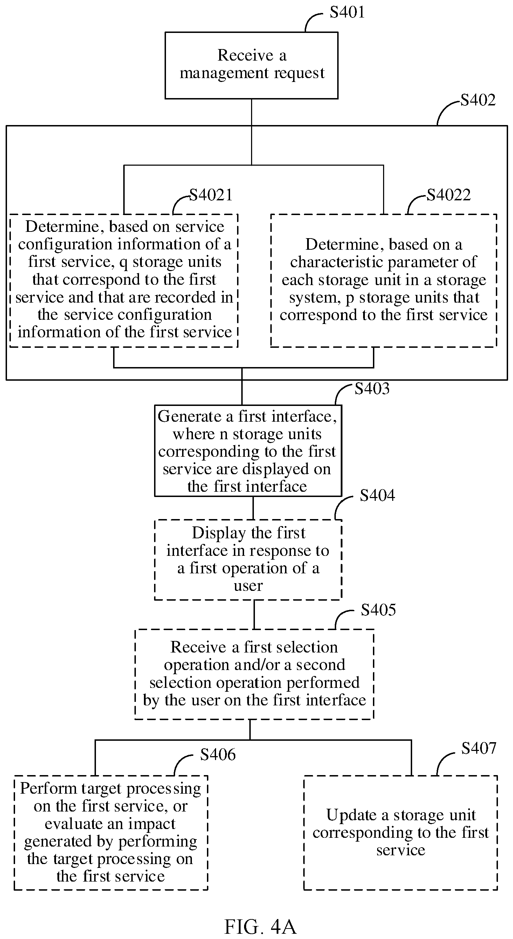

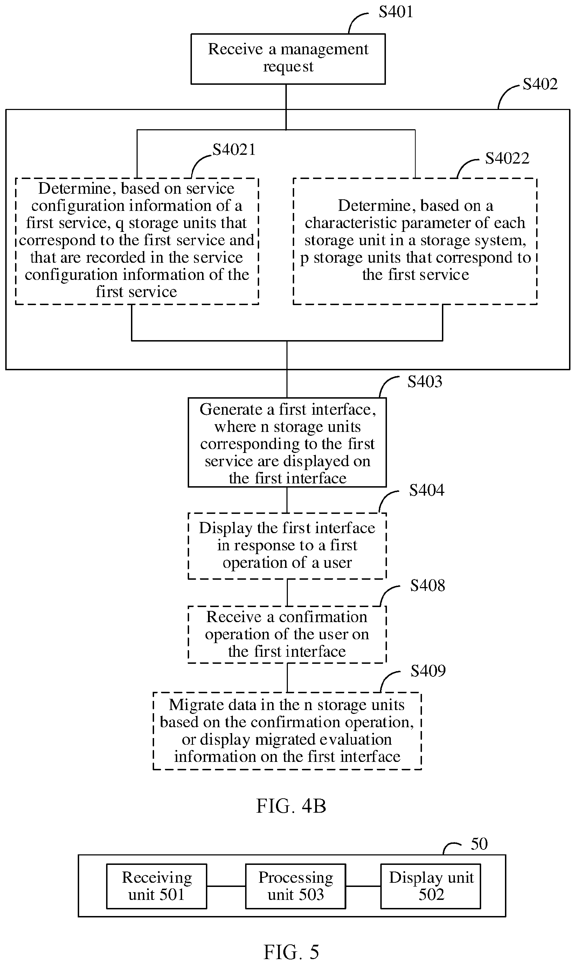

With reference to FIG. 3A, FIG. 3B, FIG. 3C, FIG. 3D, FIG. 3E, FIG. 3F, and FIG. 3G, an embodiment of this application provides an information processing method that may be specifically a LUN management method. As shown in FIG. 4A and FIG. 4B, the method may include the following steps.

S401: An information processing apparatus receives a management request.

The management request carries an identifier of a first service.

Specifically, the identifier of the first service may be understood as indicating, to the information processing apparatus, that the received management request is various identifiers corresponding to the first service.

For example, the identifier of the first service may be an identifier that indicates configuration information (referred to as configuration information A) of the first service, so that the information processing apparatus may determine, based on the identifier, that the received management request is a request corresponding to a service (that is, the first service) with the configuration information A. For another example, the identifier of the first service may be an identifier for distinguishing the first service from another service mounted in a storage system. For example, if data of five services is mounted in the storage system, the five services are marked as a service A, a service B, a service C, a service D, and a service E respectively. The service A is the first service. In this case, the identifier of the first service carried in the management request may be the service A.

In addition, it should be noted that the "service" in embodiments of this application may also be referred to as a "service", an "application", or the like, and refers to a product or a service provided for a user by using a computer. For example, the service may be specifically a service such as a database (for example, an oracle database or an IBM DB2 database) or a virtual machine (for example, vmware, hyper-v, or fusion sphere). In this embodiment of this application, a specific type of the service may not be limited.

S402: The information processing apparatus determines, based on the identifier of the first service, n storage units corresponding to the first service from a plurality of storage units in the storage system.

In actual application, the storage unit may be understood as a storage area that is physically or logically divided in the storage system, and the storage area may be allocated to a corresponding service, so that the service may store service data in the storage area. Specifically, the storage unit may be a LUN.

In actual application, the management request may be specifically various requests that indicate the storage system to determine, based on the identifier of the first service, n LUNs corresponding to the first service from a plurality of LUNs in the storage system. For example, the management request may be a request that is sent by an application server to the storage system and that carries the identifier of the first service. After the information processing apparatus in the storage system obtains the request, the information processing apparatus determines, based on the identifier of the first service in the request, the n LUNs corresponding to the first service. For another example, the management request may alternatively be, after the user performs an operation on the storage system, a request generated by the storage system in response to the operation, or the like.

In the method provided in this embodiment of this application, after receiving the management request that carries the identifier of the first service, the information processing apparatus can determine, from the plurality of LUNs in the storage system based on the identifier of the first service, the n LUNs corresponding to the first service. In this way, the first interface including the n LUNs may be displayed, so that a user knows a LUN corresponding to the first service, to perform operations such as service migration, service change, service multiplication, or service monitoring on the first service. Compared with a method in a related technology in which a user needs to first find LUNs of services from a storage system one by one, and then performs processing based on the found LUNs, the method provided in this application can reduce operation complexity of the user and reduce a risk of an operation error.

S403: The information processing apparatus generates a first interface.

n storage units corresponding to the first service are displayed on the first interface, and the n storage units are configured to store data of the first service.

For example, the first interface may be the operation interface 320 in FIG. 3B, FIG. 3C, or FIG. 3E. In the operation interface 320, after an operation that the user selects a service from the service list 321 is received, a storage unit corresponding to the service (which may be the first service) may be displayed in the "list of recommended migration LUNs" 3221 in the window 322.

For another example, the first interface may be the operation interface 330 in FIG. 3F or FIG. 3G. A plurality of windows (that is, the window 331a, the window 331b, and the window 331c) are displayed on the operation interface 330 and correspond to different services respectively. A "list of recommended migration LUNs" corresponding to different services is displayed. A storage unit corresponding to the service is displayed in the "list of recommended migration LUNs".

In an implementation, the method further includes:
S404: The information processing apparatus displays the first interface in response to a first operation of the user.

The first operation indicates to perform target processing on the service in the storage system, or the first operation indicates to evaluate an impact generated by performing target processing on the service in the storage system. The target processing may include adding, deleting, or migrating a storage unit mounted to the service in the storage system.

For example, the target processing may be any one of service migration, service multiplication, service change, or service monitoring. For an implementation process and an objective of the service migration, the service multiplication, the service change, or the service monitoring, refer to the foregoing descriptions. Details are not described herein again.

For example, the first operation may be specifically a click operation on any one of the four controls, that is, the "service migration", the "service multiplication", the "service change", or the "service monitoring" in the operation interface 310 in FIG. 3A in the foregoing example. Specifically, for example, when service migration needs to be performed on a service or an impact of service migration needs to be evaluated, the user may click the "service migration" control in the operation interface 310 to trigger a corresponding process.

Specifically, on the first interface, in an implementation, the user may select an appropriate LUN from the n LUNs for subsequent processing through an operation; or in another implementation, when the n LUNs need to be processed together, the user may also directly perform confirmation on the first interface, and then perform subsequent processing on the n LUNs directly without a selection. The following separately describes the foregoing two implementations by using examples.

In a first implementation, as shown in FIG. 4A, the method further includes:

S405: The information processing apparatus receives a first selection operation and/or a second selection operation performed by the user on the first interface.

The first selection operation is used to select at least one storage unit from the n storage units corresponding to the first service on the first interface, where n is a positive integer.

For example, as shown in FIG. 3B, the first selection operation may be an operation that the user selects a LUN identifier in the "list of recommended migration LUNs" 3221, to transfer the selected LUN identifier into the "list of to-be-migrated LUNs" 3222. For another example, as shown in FIG. 3F, the first selection operation may be an operation that the user selects a LUN identifier in the "list of recommended migration LUNs".

The second selection operation is used to select at least one storage unit other than the n storage units corresponding to the first service on the first interface.

For example, as shown in section (a) in FIG. 3C and FIG. 3D, the first selection operation may include an operation that the user clicks the "custom" control in the window 322 and selects a LUN ID in the window 3223, to add the selected LUN ID (that is, the LUN-6 in the figure) to the "list of to-be-migrated LUNs" 3222, as shown in FIG. 3E. For another example, as shown in section (b) in FIG. 3C and FIG. 3D, the first selection operation may include an operation that the user clicks the "custom" control in the window 322 and enters a LUN ID in the window 3224, to add the input LUN ID (that is, the LUN-6 in the figure) to the "list of to-be-migrated LUNs" 3222, as shown in FIG. 3E. For another example, as shown in FIG. 3F, the first selection operation may be an operation that the user clicks the "custom" control in the window 331a and then enters a LUN ID or selects a LUN ID.

S406: Perform target processing on the first service based on the first selection operation and/or the second selection operation, or evaluate an impact generated by performing the target processing on the first service.

For example, after the first selection operation and/or the second selection operation of the user, as shown in FIG. 3E, after the user clicks the "service migration" control, the information processing apparatus performs service migration based on the LUN in the "list of to-be-migrated LUNs" 3222; or after the user clicks the "migration evaluation" control, the information processing apparatus evaluates, based on the LUN in the "list of to-be-migrated LUNs" 3222, the impact generated by performing target processing on the first service.

In addition, after the first selection operation and/or the second selection operation is received, the method further includes:
S407: Update a storage unit corresponding to the first service based on the first selection operation and/or the second selection operation.

In the foregoing implementation, it is considered that the storage unit corresponding to the service displayed on the first interface may miss the storage unit mounted to the service, or may include a storage unit not mounted to the service. Therefore, the method provided in this example may further update the storage unit corresponding to the service based on a selection operation (for example, the first selection operation and the second selection operation in the foregoing) of the user, to display a more appropriate correspondence between the service and the storage unit in a subsequent process.

In a second implementation, as shown in FIG. 4B, the method further includes:
S408: The information processing apparatus receives a confirmation operation of the user on the first interface.
S409: The information processing apparatus migrates data in the n storage units based on the confirmation operation, or displays migrated evaluation information on the first interface.

For example, as shown in FIG. 3A, the confirmation operation may be that the user clicks the "service migration" control on the lower right of the interface. In this case, it may be understood that all LUNs in the "list of recommended migration LUNs" 3221 need to be processed (that is, migrated, or performed migration evaluation) by default.

In addition, it should be noted that, in the foregoing example, service migration or service migration evaluation is mainly used as an example to describe an implementation process of the solution. It may be understood that the technical solutions provided in embodiments of this application may also be applied to another scenario in which an operation such as replicating, deleting, or monitoring needs to be performed on all or some LUNs corresponding to a service. For example, when the user selects different controls in the interface in FIG. 3A, the information processing apparatus may implement performing operations such as replicating, deleting, or monitoring on all or some LUNs corresponding to the service based on an implementation process similar to the foregoing example. Repeated content is not described herein again.

In addition, to determine a correspondence between each service and a storage unit in the storage system, the information processing apparatus can determine, based on the identifier of the first service, the n storage units corresponding to the first service from the plurality of storage units in the storage system. As shown in FIG. 4A and FIG. 4B, S402 may specifically include the following steps.

S4021: The information processing apparatus determines, based on information recorded in service configuration of the first service, q storage units that correspond to the first service and that are recorded in the service configuration information of the first service.

The n storage units corresponding to the first service displayed on the first interface include the q storage units.

Specifically, in an actual application process, the information processing apparatus may determine the information recorded in service configuration of the first service based on the identifier of the first service carried in the management request. The information recorded in the service configuration of the first service may be understood as information that is set when the first service is created or the first service is changed and that does not change with service load.

Specifically, it is considered that in some application scenarios, for ease of subsequent maintenance, a skilled person may record the storage unit mounted to the service in the information recorded in the service configuration in a process of creating or changing the service. Therefore, some or all of the storage units corresponding to the first service may be determined based on the information recorded in the service configuration of the first service.

For example, the service configuration information may be one item in a client of the first service. The item records q storage units mounted to the first service. The q storage units corresponding to the first service may be determined by reading content in the item in the client. For another example, when the first service is created, a skilled person may record, in a configuration file of a LUN mounted to the first service, that the LUN is mounted to the first service, and the service configuration information may further include the configuration file of the LUN.

S4022: The information processing apparatus determines, based on a characteristic parameter of each storage unit in the storage system, p storage units that correspond to the first service.

The n storage units corresponding to the first service displayed on the first interface include the p storage units.

Specifically, in an actual application process, the information processing apparatus may determine a characteristic parameter of the first service based on the identifier of the first service carried in the management request. A characteristic parameter of a storage unit may include a configuration parameter of the storage unit, for example, an input/output operations per second (input/output operations per second, IOPS), a bandwidth, access latency, a size of an IO, a read IO ratio, and the like of the LUN. In addition, a characteristic parameter of a storage unit may further include a performance parameter of the storage unit in a running process, for example, a historical average IOPS, historical average latency, and a current free space size of a LUN.

Specifically, it is considered that storage units (for example, LUNs) corresponding to different types of services are different in characteristic parameters. Therefore, a type of a service corresponding to a storage unit may be determined based on a characteristic parameter of the storage unit, to further determine the service corresponding to the storage unit.

Further, in an implementation, an algorithm model can be used, a characteristic parameter of each storage unit in the storage system may be separately input into the algorithm model, and the algorithm model determines, from the plurality of storage units in the storage system, p storage units corresponding to the first service. For example, content of S4022 may be implemented by using a process of the following steps S4022a and S4022b.

S4022a: The information processing apparatus separately determines a service type of each storage unit in the storage system based on the characteristic parameter of each storage unit in the storage system by using the algorithm model.

The algorithm model is a model that is configured to divide, based on a characteristic parameter of a storage unit, a service type corresponding to the storage unit. For example, the algorithm model may be a machine learning model such as a neural network model.

For example, the algorithm model may be a classifier model. When a characteristic parameter of a specific storage unit (referred to as a storage unit A) is input into the classifier model, the classifier model may output probabilities that the storage unit A corresponds to different service types. When a probability that the storage unit corresponds to a specific service type (referred to as a service type x) reaches a preset standard (for example, reaches a threshold), it is determined that the storage unit A corresponds to the service type x, and then the service corresponding to the storage unit may be determined.

In a possible design, before performing 4022a, the information processing apparatus may further train the algorithm model by using sample data, for example, characteristic parameters of a plurality of storage units whose service types have been determined. Certainly, in an actual application process, another hardware device other than the information processing apparatus may also be used to perform a process of training the algorithm model. This may not be limited in this application.

S4022b: The information processing apparatus determines, based on a service type of each storage unit in the storage system, q storage units corresponding to the first service.

For example, if it is determined that service types of q storage units in m storage units included in the storage system are a DB2 database, and it is known that only the first service in the services mounted in the storage system is a DB2 database service, it may be determined that the q storage units correspond to the first service.

In addition, in an implementation, in this embodiment of this application, when the information processing apparatus displays, on the first interface based on S404, the n storage units corresponding to the first service, for the p storage units determined in S4022, a display sequence of the p storage units on the first interface may be determined based on a probability (referred to as a first probability) that is determined in S4022a and that is of the p storage units corresponding to the service type of the first service. For example, a storage unit with a higher first probability is arranged in a front position on the first interface.

In addition, in the technical solutions provided in this embodiment of this application, a correspondence between a service and a storage unit may be further updated based on a result of selecting a storage unit corresponding to a service by a user during use (for example, based on a selection result of the first selection operation and the second selection operation), to provide a more desirable correspondence between a service and a storage unit for the user in a subsequent process. Specifically, in an implementation, S407 may include:
The information processing apparatus updates the service configuration information of the first service in S4021 and/or updates the algorithm model in S4022a based on selection results of the first selection operation and the second selection operation.

For example, assuming that in the "list of recommended migration LUNs" 3221 in FIG. 3E, the LUN-1, the LUN-2, and the LUN-5 are LUNs that are corresponding to the first service and that are recorded in the service configuration information of the first service, and the LUN-3, the LUN-4, and the LUN-5 are LUNs that are corresponding to the first service and that are determined based on an algorithm model.

Because the user finally selects the LUN1-1, the LUN-2, the LUN-3, and the LUN-6 as LUNs mounted to the first service, a correspondence between the first service and the LUN-5 in the service configuration information may be deleted by modifying the service configuration information. In addition, the algorithm model may be retrained based on the LUN1-1, the LUN-2, the LUN-3, and the LUN-6 selected by the user, so that the LUN displayed in the "list of recommended migration LUNs" is more desirable for subsequent use.

It should be noted that, in an implementation, content of S501 to S504 may be performed by the information processing apparatus that performs S401 to S405 (for ease of differentiation, the information processing apparatus that performs S401 to S405 may be referred to as a "first information processing apparatus"). In another implementation, content of S501 to S504 may also be performed by another hardware device (referred to as a "second information processing apparatus") independent of the information processing apparatus. This may not be limited in this application.

In addition, in embodiments of this application, the information processing apparatus may perform some or all the steps in embodiments of this application. These steps or operations are merely examples. In embodiments of this application, other operations or variations of various operations may further be performed. In addition, the steps may be performed in different sequences presented in embodiments of this application, and not all the operations in embodiments of this application may need to be performed.

It may be understood that, to implement the functions in the foregoing embodiments, the information processing apparatus includes corresponding hardware structures and/or software modules for performing the functions. A person skilled in the art should be easily aware that, based on the units and the method steps in the examples described in embodiments disclosed in this application, this application can be implemented through hardware or a combination of hardware and computer software. Whether a specific function is performed through hardware or hardware driven by computer software depends on particular application scenarios and design constraint conditions of the technical solutions.

FIG. 5 is a schematic diagram of a structure of another information processing apparatus according to this application. The information processing apparatus 50 may be configured to implement functions of the steps in the foregoing method embodiments. Therefore, beneficial effects of the foregoing method embodiments can also be implemented. In this embodiment of this application, the information processing apparatus 50 may be the application server 100 or some hardware in the application server 100 in FIG. 1A or FIG. 1B. For another example, the information processing apparatus 50 may be a hardware member with a management and control function in the storage system 120 in FIG. 1A or FIG. 1B. For example, the information processing apparatus 50 may be a storage server with a management and control function in a distributed storage system or some hardware inside the storage server, or a storage engine in a centralized storage system or some hardware inside the storage engine.

As shown in FIG. 5, the information processing apparatus 50 includes one or more of a receiving unit 501, a display unit 502, and a processing unit 503. The information processing apparatus 50 is configured to implement functions of the steps in the method embodiment corresponding to FIG. 4A and/or FIG. 4B.

For example, when the information processing apparatus 50 is configured to implement the method shown in FIG. 4A, the receiving unit 501 is configured to perform one or more of S401 and S405. When the information processing apparatus 50 is configured to implement the method shown in FIG. 4B, the receiving unit 501 is configured to perform one or more of S401 and S408. When the information processing apparatus 50 is configured to implement the method shown in FIG. 4A or FIG. 4B, the display unit 502 is configured to perform S403 or S404. When the information processing apparatus 50 is configured to implement the method shown in FIG. 4A, the processing unit 503 is configured to perform one or more of S402, S406, or S407. Alternatively, when the information processing apparatus 50 is configured to implement the method shown in FIG. 4B, the processing unit 503 is configured to perform one or more of S402 or S409.

For more detailed descriptions of the receiving unit 501, the display unit 502, and the processing unit 503, directly refer to related descriptions in the method embodiments corresponding to FIG. 4A and/or FIG. 4B. Details are not described herein again.

The method steps in embodiments of this application may be implemented by using hardware, or may be implemented by executing software instructions by a processor. The software instructions include a corresponding software module. The software module may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, all or some processes or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or a wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, an SSD.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, "a plurality of" means two or more, and other quantifiers are similar. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Furthermore, "at least one of (at least one of)..." means one or any combination of subsequent associated objects. For example, "at least one of A, B, and C" includes A, B, C, AB, AC, BC, or ABC. In the text descriptions of this application, the character "/" usually indicates an "or" relationship between the associated objects. In a formula in this application, the character "/" indicates a "division" relationship between the associated objects.

It may be understood that various numbers in embodiments of this application are merely distinguished for ease of description, and are not intended to limit the scope of embodiments of this application. The sequence numbers of the foregoing processes do not mean execution sequences, and the execution sequences of the processes should be determined based on functions and internal logic of the processes.

## Claims

1. A LUN management method, applied to a storage system, wherein the storage system stores, based on a write input/output interface IO sent by an application server, data of a plurality of services run on the application server into a plurality of logical units LUNs in the storage system, and the method comprises:
receiving a management request, wherein the management request carries an identifier of a first service;
determining, from the plurality of LUNs based on the identifier of the first service, n LUNs corresponding to the first service; and
generating a first interface, wherein the n LUNs corresponding to the first service are displayed on the first interface, the n LUNs are configured to store data of the first service, and n is a positive integer.

2. The method according to claim 1, wherein the method further comprises:
receiving a confirmation operation of a user on the first interface; and
migrating data in the n LUNs based on the confirmation operation, or displaying migrated evaluation information on the first interface.

3. The method according to claim 1, wherein the method further comprises:
receiving a first selection operation and/or a second selection operation of a user on the first interface, wherein
at least one LUN is selected from the n LUNs through the first selection operation, and at least one LUN is selected from LUNs other than the n LUNs through the second selection operation.

4. The method according to claim 3, wherein the method further comprises:
migrating data in the LUN selected by the first selection operation and/or the second selection operation, or displaying migrated evaluation information on the first interface.

5. The method according to claim 1 or 3, wherein the method further comprises:
replicating, deleting, or monitoring the n LUNs; or
replicating, deleting, or monitoring the LUN selected by the first selection operation and/or the second selection operation.

6. The method according to any one of claims 1 to 5, wherein the determining, from the plurality of LUNs based on the identifier of the first service, n LUNs corresponding to the first service comprises:
determining, based on characteristic parameters of the LUNs in the storage system, p LUNs corresponding to the first service, wherein the p LUNs are at least one of the n LUNs, wherein
the characteristic parameter comprises a LUN configuration parameter and/or a LUN performance parameter.

7. The method according to claim 6, wherein the determining, based on characteristic parameters of the LUNs in the storage system, p LUNs corresponding to the first service specifically comprises:
inputting the characteristic parameters of the LUNs into an algorithm model to obtain the p LUNs.

8. The method according to claim 6 or 7, wherein the LUN configuration parameter comprises at least one of the following: an input/output operations per second IOPS, a bandwidth, access latency, a size of the IO, or a read IO ratio that is configured by the user for the LUN, and the LUN performance parameter comprises at least one of the following: a historical average IOPS, historical average latency, or a current free space size during running of the LUN.

9. The method according to any one of claims 1 to 8, wherein the determining, from the plurality of LUNs based on the identifier of the first service, n LUNs corresponding to the first service comprises:
obtaining, based on information recorded in service configuration of the first service, q LUNs corresponding to the first service, wherein the q LUNs are at least one of the n LUNs.

10. A LUN management apparatus, used in a storage system, wherein the storage system stores, based on a write input/output interface IO sent by an application server, data of a plurality of services run on the application server into a plurality of logical units LUNs in the storage system, and the apparatus comprises:
a receiving unit, configured to receive a management request, wherein the management request carries an identifier of a first service;
a processing unit, configured to determine, from the plurality of LUNs based on the identifier of the first service, n LUNs corresponding to the first service; and
a processing unit, configured to generate a first interface, wherein the n LUNs corresponding to the first service are displayed on the first interface, the n LUNs are configured to store data of the first service, and n is a positive integer.

11. The apparatus according to claim 10, wherein
the receiving unit is further configured to receive a confirmation operation of a user on the first interface; and
the processing unit is further configured to migrate data in the n LUNs based on the confirmation operation, or display migrated evaluation information on the first interface.

12. The apparatus according to claim 10, wherein
the receiving unit is further configured to receive a first selection operation and/or a second selection operation of a user on the first interface, wherein
at least one LUN is selected from the n LUNs through the first selection operation, and at least one LUN is selected from LUNs other than the n LUNs through the second selection operation.

13. The apparatus according to claim 12, wherein
the processing unit is further configured to migrate data in the LUN selected by the first selection operation and/or the second selection operation, or display migrated evaluation information on the first interface.

14. The apparatus according to claim 10 or 12, wherein
the processing unit is further configured to replicate, delete, or monitor the n LUNs; or
the processing unit is further configured to replicate, delete, or monitor the LUN selected by the first selection operation and/or the second selection operation.

15. The apparatus according to any one of claims 10 to 14, wherein the processing unit being configured to determine, from the plurality of LUNs based on the identifier of the first service, n LUNs corresponding to the first service comprises:
the processing unit being specifically configured to determine, based on characteristic parameters of the LUNs in the storage system, p LUNs corresponding to the first service, wherein the p LUNs are at least one of the n LUNs, wherein
the characteristic parameter comprises a LUN configuration parameter and/or a LUN performance parameter.

16. The apparatus according to claim 15, wherein the processing unit is specifically configured to input the characteristic parameters of the LUNs into an algorithm model to obtain the p LUNs.

17. The apparatus according to claim 15 or 16, wherein the LUN configuration parameter comprises at least one of the following: an input/output operations per second IOPS, a bandwidth, access latency, a size of the IO, or a read IO ratio that is configured by the user for the LUN, and the LUN performance parameter comprises at least one of the following: a historical average IOPS, historical average latency, or a current free space size during running of the LUN.

18. The apparatus according to any one of claims 10 to 17, wherein the processing unit being configured to determine, from the plurality of LUNs based on the identifier of the first service, n LUNs corresponding to the first service comprises:
the processing unit being specifically configured to obtain, based on information recorded in service configuration of the first service, q LUNs corresponding to the first service, wherein the q LUNs are at least one of the n LUNs.

19. A LUN management apparatus, comprising a processor and an interface, wherein the processor receives or sends data through the interface, and the processor is configured to implement the method according to any one of claims 1 to 9.

20. A computer-readable storage medium, wherein the storage medium stores a computer program, and when the computer program is executed by a processor, the method according to any one of claims 1 to 9 is implemented.

21. A storage system, comprising the LUN management apparatus according to any one of claims 10 to 19.

22. A computer program product, wherein the computer program product comprises instructions, and when the instructions are run on a processor, the method according to any one of claims 1 to 9 is implemented.
